(19) Europäisches Patentamt
European Patent Office
Office européen des brevets

(11) **EP 2 850 709 B1**

(12) **FASCICULE DE BREVET EUROPEEN**

(45) Date de publication et mention
de la délivrance du brevet:
**25.03.2020 Bulletin 2020/13**

(21) Numéro de dépôt: **13723118.9**

(22) Date de dépôt: **15.05.2013**

(51) Int Cl.:
*H02H 3/087* (2006.01)     *H02H 6/00* (2006.01)
*H02H 7/22* (2006.01)

(86) Numéro de dépôt international:
**PCT/EP2013/060011**

(87) Numéro de publication internationale:
**WO 2013/171251 (21.11.2013 Gazette 2013/47)**

(54) **DISPOSITIF ÉLECTRONIQUE DE PROTECTION D'UN CONDUCTEUR ÉLECTRIQUE ET PROCÉDÉ DE COMMANDE D'UN TEL DISPOSITIF**

ELEKTRONISCHE VORRICHTUNG ZUM SCHUTZ EINES ELEKTRISCHEN LEITERS UND VERFAHREN ZUR STEUERUNG SOLCH EINER VORRICHTUNG

ELECTRONIC DEVICE FOR PROTECTING AN ELECTRIC CONDUCTOR AND METHOD FOR CONTROLLING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2012 FR 1254471**

(43) Date de publication de la demande:
**25.03.2015 Bulletin 2015/13**

(73) Titulaires:
• **PSA Automobiles SA**
**78300 Poissy (FR)**
• **Centre National de la Recherche Scientifique (C.N.R.S.)**
**75016 Paris (FR)**

(72) Inventeurs:
• **GUILLEMARD, Franck**
**F-94370 Sucy En Brie (FR)**
• **BAVOUX, Bernard**
**F-91440 Bures Sur Yvette (FR)**
• **NGUYEN, Huy Cuong**
**94350 Villiers sur Marne (FR)**
• **NOCQUET, Cecile**
**F-94550 Chevilly Larue (FR)**
• **PAVERO, Guillaume**
**F-91570 Bievres (FR)**
• **CLOUP, Jean Paul**
**F-94100 St Maur Des Fosses (FR)**
• **SABATIER, Jocelyn**
**F-33140 Villenave D'Ornon (FR)**
• **MOREAU, Xavier**
**F-33910 Saint Ciers d'Abzac (FR)**

(56) Documents cités:
**EP-A1- 2 296 243     EP-A2- 2 058 914
JP-A- 2004 336 887**

**EP 2 850 709 B1**

## Description

La présente invention revendique la priorité de la demande française 1254471 déposée le 16 mai 2012 dont le contenu (texte, dessins et revendications) est ici incorporé par référence.

## Domaine de l'invention

La présente invention concerne d'une manière générale le domaine de la protection de conducteurs électriques en cas de court-circuit, et se rapporte en particulier à la protection de tels conducteurs agencés dans un véhicule automobile.

## Arrière-plan de l'invention

De nos jours, la plupart des organes d'un véhicule automobile utilisent des composants électriques de différente nature tels que des moteurs, des résistances, des capteurs ou bien encore des lampes.

Ces composants, appelés également charges électriques, sont alimentés par du courant transporté dans des conducteurs électriques agencés en différents torons au sein du véhicule. Ces conducteurs électriques forment ainsi des circuits électriques permettant de relier électriquement les différentes charges électriques à des boîtiers électroniques de commande eux-mêmes reliés à une alimentation (la batterie du véhicule). De manière plus précise, le terme conducteur électrique désigne le système d'interconnexion entre un boitier électronique et une charge. Un tel conducteur comporte ainsi au moins un fil, au moins un premier connecteur disposé entre le boîtier et le fil, et au moins un deuxième connecteur disposé entre le fil et la charge.

Pour éviter les risques de surchauffe en cas de court-circuit, il est nécessaire de mettre en place un dispositif de protection de ces conducteurs électriques. Un tel dispositif est constitué classiquement d'un fusible placé dans le boîtier électronique situé entre la batterie et le conducteur électrique, ce fusible pouvant être associé suivant les configurations à un interrupteur de type relais gérant l'alimentation de la charge par le conducteur électrique.

Le fusible est dimensionné pour fondre lorsqu'il est traversé par un courant supérieur au courant normal de fonctionnement, risquant de provoquer un échauffement important des conducteurs susceptible d'entraîner leur dégradation voire leur inflammation.

Malheureusement, le comportement transitoire de la charge (caractérisé par des courants importants sur des temps faibles), la dispersion des caractéristiques électriques du fusible ainsi que l'existence d'une zone « indéterminée » pour laquelle le comportement de ce fusible reste mal maitrisé, sont autant de contraintes qui doivent être prise en compte lors du choix du conducteur électrique à utiliser.

Cela explique qu'en pratique, les conducteurs choisis présentent des sections surdimensionnées, entrainant de fait des surcoûts non négligeables.

Autres dispositifs de protection d'un conducteur électrique sont divulgués par l'art antérieur EP 2058 914, JP 2004 336887, EP 2 296 243.

## Objet et résumé de l'invention

La présente invention selon les revendications principales 1 et 10 vise donc à fournir une protection plus efficace des conducteurs électriques permettant d'éviter leur surdimensionnement.

Elle propose à cet effet, un dispositif électronique de protection d'un conducteur électrique reliant électriquement une charge électrique à une alimentation électrique, ledit dispositif comportant un boitier électronique de protection situé entre ledit conducteur et ladite alimentation,
caractérisé en ce que ledit dispositif comporte :

- un capteur de courant apte à mesurer l'intensité du courant circulant dans ledit conducteur ;
- un capteur de température apte à mesurer la température ambiante à proximité d'un point situé le long dudit conducteur ;

et en ce que ledit boîtier comporte :

- un interrupteur électronique de type MOSFET pilotable en mode modulation de largeur d'impulsion selon une période prédéterminée et un rapport cyclique variable ; et
- un module de commande apte à déterminer et à transmettre audit interrupteur selon un intervalle régulier, une nouvelle valeur dudit rapport cyclique en fonction des données reçues dudit capteur de température et dudit capteur de courant.

Le dispositif selon l'invention en associant un interrupteur électronique de type MOSFET à un module de commande du rapport cyclique de cet interrupteur (c'est à dire du pourcentage de temps pendant lequel cet interrupteur électronique demeure en position fermée sur une période), régule l'intensité efficace du courant circulant à l'intérieur du conducteur en fonction de l'évolution de l'intensité instantanée du courant traversant ce conducteur lorsque l'interrupteur est en position fermée et de la variation de la température ambiante à proximité d'un point sensible du conducteur dont la variation influe directement sur la quantité de chaleur pouvant être dissipée à l'extérieur du conducteur.

Cette régulation de l'intensité efficace du courant traversant le conducteur permet ainsi de limiter l'échauffement de ce conducteur, notamment lors de la survenance d'un court-circuit, et donc d'éviter de surdimensionner la section de ce conducteur.

Selon des caractéristiques préférées du dispositif, prises seules ou en combinaison :

- ledit dispositif comporte une multitude de dits capteurs de température ambiante disposés le long dudit conducteur à proximité des points susceptibles d'être les plus chauds sous l'effet d'un courant excessif circulant dans ledit conducteur ;
- ledit dispositif comporte un capteur de température de la semelle dudit interrupteur électronique ;
- ladite alimentation électrique est formée par la batterie d'un véhicule automobile ;
- ledit conducteur comporte un fil et deux connecteurs disposés aux deux extrémités dudit fil, le premier des dits connecteurs étant branché sur ledit boîtier électronique tandis que le second est branché sur ladite charge ; et/ou
- ledit module de commande est implanté soit physiquement en matériel au sein de l'électronique de pilotage externe audit interrupteur ou au sein même dudit interrupteur, soit en logiciel via un algorithme stocké en mémoire et relié à un calculateur présent sur une carte électronique que comporte ledit boitier.

La présente invention a également pour objet un procédé de commande d'un tel dispositif électronique de protection d'un conducteur électrique.

Le procédé comporte une première étape d'estimation de la valeur de la température en au moins un point sensible dudit conducteur et en fonction des données reçues dudit capteur de température et dudit capteur de courant, et une deuxième étape de protection au cours de laquelle la valeur dudit rapport cyclique de l'interrupteur électronique est calculée en fonction de la différence entre une température maximale prédéfinie pour ledit conducteur et la dite valeur estimée de la température.

Selon des caractéristiques préférées du procédé, prises seules ou en combinaison :

- ladite première étape d'estimation est reproduite périodiquement selon une période d'échantillonnage ;
- ladite première étape d'estimation comporte une sous-étape de détermination de la valeur de l'intensité efficace du courant circulant dans ledit conducteur en fonction de la valeur du rapport cyclique calculée à la période d'échantillonnage précédente, et de la dernière valeur de l'intensité du courant circulant dans ledit conducteur ayant été transmise par ledit capteur de courant ;
- ladite première étape d'estimation comporte une sous-étape de détermination, en fonction de ladite valeur de l'intensité efficace et de la dernière valeur de la température ambiante ayant été transmise par ledit capteur de température, de la quantité de chaleur générée par effet joule sur une dite période d'échantillonnage par le passage du courant dans ledit conducteur diminuée de la quantité de chaleur évacuée durant la même dite période par ledit conducteur vers l'air ambiant ;
- ladite période d'échantillonnage de ladite première étape d'estimation est égale à ladite période de pilotage de l'interrupteur électronique ;
- ladite deuxième étape de protection est reproduite périodiquement selon une période d'échantillonnage égale à un multiple de ladite période de pilotage de l'interrupteur électronique ;
- ledit multiple de ladite période de pilotage de l'interrupteur électronique est de préférence supérieur ou égal à 10 ;
- ladite deuxième étape de protection présente deux modes de fonctionnement, un premier mode nommé « fusible désactivé » pour lequel la valeur dudit rapport cyclique est toujours égale à 1, et un second mode nommé « fusible activé » pour lequel cette valeur est calculée par un régulateur en fonction de ladite différence ; le passage dudit mode « fusible désactivé » audit mode « fusible activé » s'effectuant dès que ladite différence e devient négative, et le passage inverse du mode « fusible activé » au mode « fusible désactivé » s'effectuant dès que cette valeur calculée par ledit régulateur devient supérieure à 1 ;
- ledit régulateur est une version discrétisée d'un régulateur proportionnel intégral défini par son gain proportionnel et un son gain intégral ;
- ladite deuxième étape de protection présente un premier mode de fonctionnement nommé « disponible » pour lequel la valeur dudit rapport cyclique est toujours égale à 1, et un deuxième mode de fonctionnement nommé « inhibition temporaire » pour lequel cette valeur est toujours égale à 0 ; le passage dudit mode « disponible » audit mode « inhibition temporaire » s'effectuant dès que ladite différence devient négative, et le passage inverse du mode « inhibition temporaire » au mode « disponible » s'effectuant dès que le temps passé dans ledit mode « inhibition temporaire » atteint une durée prédéfini ;

- chaque passage dudit mode « disponible » audit mode « inhibition temporaire » est comptabilisé à travers l'incrémentation d'un indice ; et/ou

- ladite deuxième étape de protection présente un troisième mode de fonctionnement nommé « inhibition définitive » similaire au mode « inhibition temporaire » mais irréversible, le passage vers ledit troisième mode s'effectuant dès que le nombre de défauts comptabilisés par ledit indice dépasse un seuil prédéfini.

**Brève description des dessins**

L'exposé de l'invention sera maintenant poursuivi par la description détaillée d'un exemple de réalisation, donnée ci-après à titre illustratif mais non limitatif, en référence aux dessins annexés, sur lesquels :

- la figure 1 représente un schéma fonctionnel d'un dispositif électronique de protection d'un conducteur électrique selon l'invention ;
- la figure 2 représente une vue en coupe transversale du conducteur protégé par le dispositif selon l'invention ;
- la figure 3 représente un organigramme simplifié du procédé de commande d'un dispositif selon l'invention ;
- la figure 4 détaille la logique de fonctionnement de la deuxième étape de protection mise en œuvre dans le procédé selon un mode de réalisation préféré ; et
- la figure 5 détaille la logique de fonctionnement de la deuxième étape de protection mise en œuvre dans le procédé selon une variante de réalisation.

**Description détaillée d'un mode de réalisation**

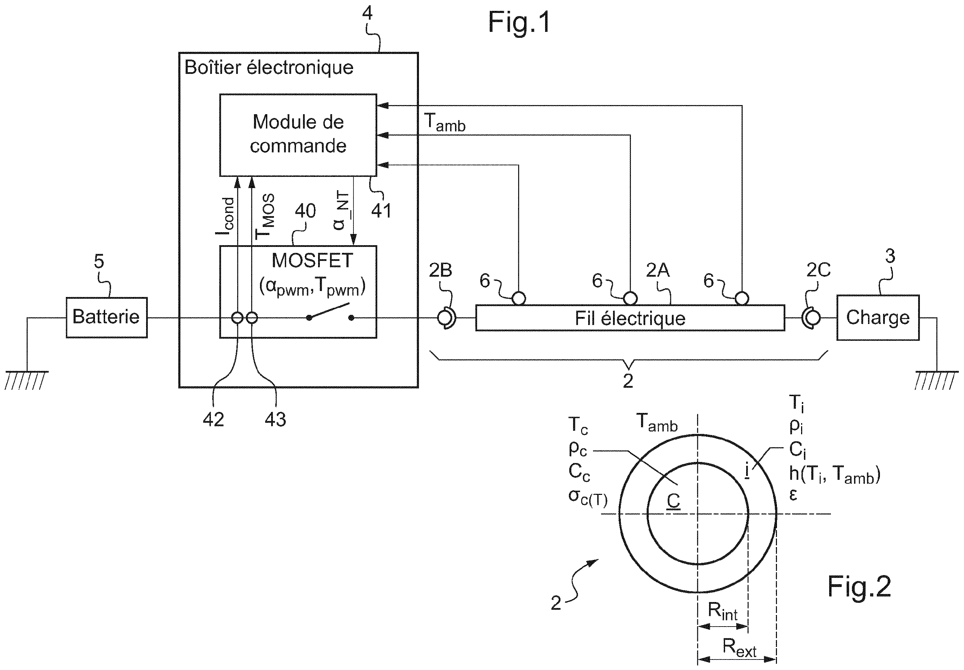

La figure 1 représente un circuit électrique comportant un conducteur 2 reliant électriquement une charge électrique 3 (par exemple, une lampe ou un capteur) à un boitier électronique de protection 4, lui-même relié à la batterie 5 d'un véhicule automobile.

Le conducteur 2 comporte un fil 2A et deux connecteurs 2B et 2C disposés respectivement à une première et à une deuxième extrémité du fil 2A.

Le premier connecteur 2B est branché sur le boitier électronique 4 tandis que le deuxième connecteur 2C est branché sur la charge 3.

Le boitier électronique de protection 4 comporte un interrupteur électronique 40 de type MOSFET piloté à l'aide d'un module de commande 41 pouvant être implanté physiquement soit en matériel au sein de l'électronique de pilotage externe à l'interrupteur 40 (MOSFET piloté) ou au sein même du composant MOSFET, soit en logiciel via un algorithme stocké en mémoire et relié à un calculateur présent sur la carte électronique du boitier 4, soit réparti dans les deux éléments pour en optimiser le coût.

Le boitier 4 comporte également un capteur de courant 42 mesurant l'intensité $I_{cond}$ du courant circulant dans le conducteur 2 lorsque l'interrupteur 40 est en position fermée, et un capteur de température 43 mesurant la température $T_{MOS}$ de la semelle de l'interrupteur MOSFET 40. De préférence, les capteurs de courant 42 et de température 43 sont directement implantés dans le MOSFET 40.

D'autre part, au moins un capteur de température 6 mesurant la température ambiante $T_{amb}$ est disposé à proximité du fil 2A du conducteur électrique 2. De préférence, une multitude de capteurs 6 sont disposés le long du conducteur 2, à proximité des points sensibles, autrement dit des points susceptibles d'être les plus chauds sous l'effet d'un courant excessif circulant dans ce conducteur électrique 2.

Les données recueillies par les capteurs 42, 43 et 6 sont acheminés vers le module de commande 41 qui estime la température $T_{cond}$ du conducteur 2 (ou les températures $T_{cond}$ en plusieurs points sensibles du conducteur si plusieurs capteurs 6 sont disposés le long de ce conducteur).

A partir de la (ou des) valeur(s) estimée(s) $T_{est\_T}$ de la température $T_{cond}$ du conducteur 2, le module 41 calcule une valeur $\alpha_{p\_NT}$ du rapport cyclique $\alpha_{pwm}$ permettant le pilotage de l'interrupteur 40 en mode PWM (Pulse Width Modulation) encore appelé mode MLI (Modulation de Largeur d'Impulsion) et suivant une période de pilotage $T_{pwm}$. Ce rapport cyclique $\alpha_{pwm}$ correspond au pourcentage de temps pendant lequel l'interrupteur électronique 40 demeure en position fermée sur une période de pilotage $T_{pwm}$.

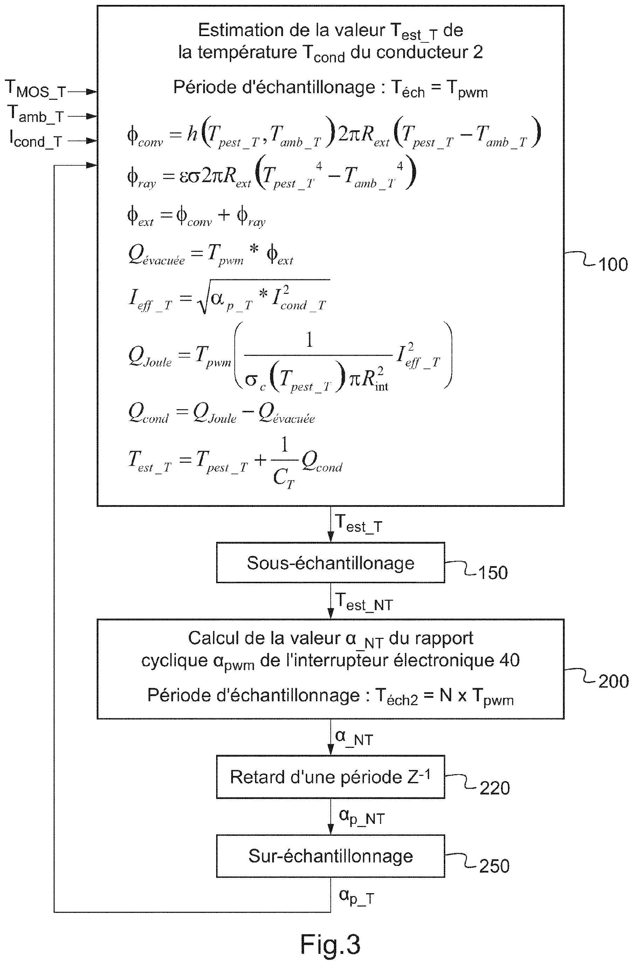

Nous allons maintenant décrire de manière plus détaillée et à l'appui des figures 3 à 5, le processus de calcul de la valeur $\alpha_{\_NT}$ du rapport cyclique $\alpha_{pwm}$ qui est mis en œuvre dans ce module de commande 41.

La première étape 100 du processus consiste à estimer la valeur de la température $T_{cond}$ du conducteur 2 en au moins un point sensible du conducteur électrique 2.

Pour ce faire, ce conducteur 2 est modélisé selon un modèle électrothermique plus ou moins élaboré, intégrant par exemple la modélisation des connecteurs 2B et 2C, la prise en compte du couplage thermique entre le boitier 4, les connecteurs 2B, 2C et le fil 2A, ou encore la prise en compte du couplage thermique entre le fil 2A et les autres fils présents dans le ou les torons.

Le modèle électrothermique du conducteur 2 pourra aussi comprendre un modèle de vieillissement du fil électrique 2A, afin d'adapter la stratégie en fonction de son usure, par exemple en prenant en compte la robustesse du fil face aux conditions d'environnement automobile, ou/et son usure en fonction des surchauffes déjà subies, ou/et éventuellement en fonction de son âge depuis sa fabrication.

De préférence et afin de limiter la puissance de calcul nécessaire, le module de commande 41 utilise un modèle électrothermique simplifié assimilant le conducteur 2 au fil 2A considéré comme un fil de grande longueur. Ce fil 2A est constitué d'une âme conductrice $c$ de rayon $R_{int}$ et d'un isolant $i$ de géométrie cylindrique entourant l'âme et d'épaisseur $R_{ext}$-$R_{int}$ où $R_{ext}$ représente le rayon extérieur du fil (figure 2).

L'âme conductrice $c$ est caractérisée par sa masse volumique $\rho_c$, sa chaleur massique $c_c$ et sa conductivité électrique $\sigma_c(T)$, cette dernière pouvant être variable avec la température du fil 2A du conducteur 2.

De son côté, l'isolant $i$ est caractérisé par sa masse volumique $\rho_i$, sa chaleur massique $c_i$, son coefficient de convection thermique d'échange avec l'air $h(T_i, T_{amb})$ (variable avec la température $T_i$ de l'isolant $i$ et la température ambiante $T_{amb}$), et par son coefficient d'émission $\varepsilon$ intervenant dans le rayonnement émis par le fil 2A dans l'air.

Par souci de simplification, le modèle utilisé considère que la température $T_c$ de l'âme conductrice $c$ et celle $T_i$ de l'isolant $i$ sont identiques, ce qui revient à dire que la température est homogène sur l'ensemble de la section du fil 2A (âme conductrice cet isolant $i$). Par la suite, la température du conducteur 2 sera considérée globalement comme une variable unique $T_{cond}$. Cette simplification permet également de considérer globalement l'inertie thermique du conducteur 2 :

$$C_T = \rho_c c_c \pi R_{int}^2 + \rho_i c_i \pi \left( R_{ext}^2 - R_{int}^2 \right)$$

L'évolution de la température $T_{cond}$ est régie par l'équation du premier degré suivante :

$$C_T \frac{dT}{dt} = \frac{1}{\sigma_c(T)\pi R_{int}^2} I^2 - \phi_{ext}\left( T_{cond}, T_{amb} \right)$$

où le terme $\dfrac{1}{\sigma_c(T)\pi R_{int}^2} I^2$ représente la puissance thermique générée par effet joule par le passage du courant dans le conducteur 2, et

où le terme $\phi_{ext}(T_{cond}, T_{amb})$ représente la puissance évacuée par le conducteur 2 vers l'air ambiant.

Ce dernier terme représente la somme de la puissance échangée avec l'air par convection $\Phi_{conv}$ et de celle échangée avec l'air par rayonnement $\Phi_{ray}$.

$$\Phi_{ext}\left( T_{cond}, T_{amb} \right) = \Phi_{conv} + \Phi_{ray}$$

$$\Phi_{conv}\left( T_{cond}, T_{amb} \right) = h\left( T_{cond}, T_{amb} \right) 2\pi R_{ext} \left( T_{cond} - T_{amb} \right)$$

$$\Phi_{ray}\left( T_{cond}, T_{amb} \right) = \varepsilon \sigma 2\pi R_{ext} \left( T_{cond}^4 - T_{amb}^4 \right)$$

En utilisant une approximation de type Euler (toute autre approximation discrète de la dérivée pouvant également être appliquée), les équations précédentes se réécrivent dans leur version discrète de la façon suivante :

$$\frac{dT}{dt} \approx \frac{T_{est\_T} - T_{pest\_T}}{T_{éch}},$$

où

$T_{éch}$ représente la période d'échantillonnage de l'estimation de la température $T_{cond}$ du conducteur 2, celle-ci étant de préférence identique à la période de pilotage $T_{pwm}$ de l'interrupteur électronique 40 (ce choix permet d'obtenir une dynamique de l'estimateur représentative sur une bande minimale de fréquence allant de 0 à 1/(10* $T_{pwm}$)) ;

$T_{est\_T}$ représente la température $T_{cond}$ du conducteur 2 nouvellement estimée ; et

$T_{pest\_T}$ représente la température $T_{cond}$ du conducteur 2 estimée à la période d'échantillonnage précédente.

soit :

$$T_{est\_T} = T_{pest\_T} + \frac{1}{C_T} Q_{cond}$$

où

$$Q_{cond} = Q_{Joule} - Q_{évacuée}$$

$$Q_{Joule} = T_{pwm} \left( \frac{1}{\sigma_c \left( T_{pest\_T} \right) \pi R_{int}^2} I_{eff\_T}^2 \right)$$

$$I_{eff\_T} = \sqrt{\alpha_{p\_T} * I_{cond\_T}^2}$$

$$Q_{évacuée} = T_{pwm} * \phi_{ext}$$

$$\phi_{ext} = \phi_{conv} + \phi_{ray}$$

$$\phi_{conv} = h\left( T_{pest\_T}, T_{amb\_T} \right) 2\pi R_{ext} \left( T_{pest\_T} - T_{amb\_T} \right)$$

$$\phi_{ray} = \varepsilon \sigma 2\pi R_{ext} \left( T_{pest\_T}^4 - T_{amb\_T}^4 \right)$$

$Q_{Joule}$ représente la quantité de chaleur générée par effet Joule sur une période d'échantillonnage $T_{éch} = T_{pwm}$ par le passage du courant dans le conducteur 2 ;

$Q_{évacuée}$ représente la quantité de chaleur évacuée durant la même période par le conducteur 2 vers l'air ambiant ;

$T_{amb\_T}$ représente la dernière valeur de la température ambiante $T_{amb}$ mesurée et transmise par le capteur 6 ;

$I_{cond\_T}$ représente la dernière valeur de l'intensité du courant $I_{cond}$ circulant dans le conducteur 2, mesurée et transmise par le capteur 42 ; $I_{eff\_T}$ représente la valeur de l'intensité efficace du courant circulant dans le conducteur 2 calculée sur la période d'échantillonnage précédente. L'intensité efficace est représentative de la puissance thermique d'échauffement de type Joule liée au passage du courant dans le conducteur 2. La valeur $I_{eff\_T}^2$ est obtenue par multiplication de la valeur $\alpha_{p\_T}$ du rapport cyclique $\alpha_{pwm}$ calculée à la période d'échantillonnage précédente, par le carré de la valeur $I_{cond\_T}$ (mesurée par le capteur 42) de l'intensité du courant $I_{cond}$ circulant dans le conducteur électrique 2 lorsque l'interrupteur 40 est en position fermée et qui peut être considérée comme quasi constante sur toute la portion $\alpha_{p\_T} * T_{pwm}$ de la période $T_{pwm}$ où l'interrupteur 40 est en position fermée); et

$\alpha_{p\_T}$ représente la valeur du rapport cyclique $\alpha_{pwm}$ calculée à la période d'échantillonnage précédente.

Lorsque la logique de protection est enclenchée (par exemple au démarrage du véhicule), le module de commande 41 initialise la valeur précédente $\alpha_{p\_T}$ du rapport cyclique $\alpha_{pwm}$ à la valeur 1 ; et la température estimée à la période précédente $T_{pest\_T}$ à la température de semelle de l'interrupteur $T_{MOS\_T}$ mesurée par le capteur 43 si celle-ci est disponible, ou à défaut à la température ambiante $T_{amb\_T}$ mesurée par le capteur 6.

Après cette phase d'initialisation, le module de commande 41 estime périodiquement la température $T_{cond}$ du conducteur 2 en exploitant le modèle électrothermique. Lors de chaque calcul, la température estimée à la période précédente $T_{pest\_T}$ est également remise à jour.

Le choix la période $T_{pwm}$ du pilotage en mode PWM de l'interrupteur 40 est le fruit d'un compromis car cette dernière doit répondre à plusieurs contraintes, en premier lieu desquelles la nature de la charge 3. Ainsi, lorsque la charge est de type éclairage, il est important de choisir une période supérieure à 25 Hz qui minimise la variation d'intensité lumineuse perceptible par l'œil.

Le niveau de protection recherché a également un impact sur le choix de la période $T_{pwm}$. Plus la période choisie sera courte, plus le processus sera apte à identifier des variations rapides de l'intensité $I_{cond}$ du courant circulant dans le conducteur électrique 2, et à réagir en conséquence. A l'inverse si la période $T_{pwm}$ est trop longue, les estimations de températures seront d'autant plus lentes et le processus ne repérera que tardivement une surchauffe liée à une variation rapide de l'intensité $I_{cond}$ de ce courant.

La charge de calcul supportable par l'électronique de pilotage de l'interrupteur 40 ainsi que par le calculateur du boitier 4 doit également être prise en compte dans le choix de la période $T_{pwm}$ puisque plus la période sera courte, plus la charge de calcul sera importante.

L'usure de l'interrupteur 40 qui est directement liée au nombre de transitions entre les phases d'ouverture et de fermeture, doit aussi être intégrée. Plus la période $T_{pwm}$ sera courte, plus le nombre de transitions subies sera grand et l'usure rapide.

Toutes ces considérations amènent à fixer de préférence la période $T_{pwm}$ à une valeur de l'ordre de 150 Hz pour une charge 3 de type ampoule électrique, cette fréquence pouvant être adaptée en fonction de la nature de la charge.

On va maintenant décrire l'étape 200 du processus qui concerne la logique de protection proprement dite du conducteur 2, cette logique utilisant la valeur $T_{est\_T}$ de la température du conducteur 2 calculée à l'étape 100 pour déterminer la valeur $\alpha_{\_NT}$ du rapport cyclique $\alpha_{pwm}$ pilotant l'interrupteur 40.

La période d'échantillonnage $T_{éch2}$ choisie pour cette logique de protection sera de préférence un multiple de la période de pilotage PWM $T_{pwm}$, soit $T_{éch2} = N* \ T_{pwm}$ où le multiple N est de préférence supérieur ou égal à 10 afin de limiter les erreurs dues à des dynamiques mal calées.

Notons que cette étape 200 de protection, fait appel à un sous échantillonnage (étape 150) des valeurs de température estimée $T_{est\_T}$ déterminées pendant la première étape 100 d'estimation (figure 3). En effet, la logique de protection tournant N fois plus lentement que la logique d'estimation, celle-ci ne prélève qu'une valeur $T_{est\_NT}$ toutes les N périodes $T_{pwm}$.

Il est à noter également que la valeur précédente $\alpha_{p\_T}$ du rapport cyclique $\alpha_{pwm}$ nécessaire pour réaliser l'étape 100 d'estimation, est déterminée par l'application d'un retard $Z^{-1}$ d'une période (étape 220) à la valeur $\alpha_{\_NT}$ de ce même rapport cyclique $\alpha_{pwm}$ calculée par le processus lors de l'étape de protection 200 ($\alpha_{\_NT} \rightarrow \alpha_{p\_NT}$) ; suivi d'un sur-échantillonnage (étape 250) de cette dernière valeur $\alpha_{p\_NT}$, la logique d'estimation s'exécutant N fois plus rapidement que la logique de protection ($\alpha_{p\_NT} \rightarrow \alpha_{p\_T}$).

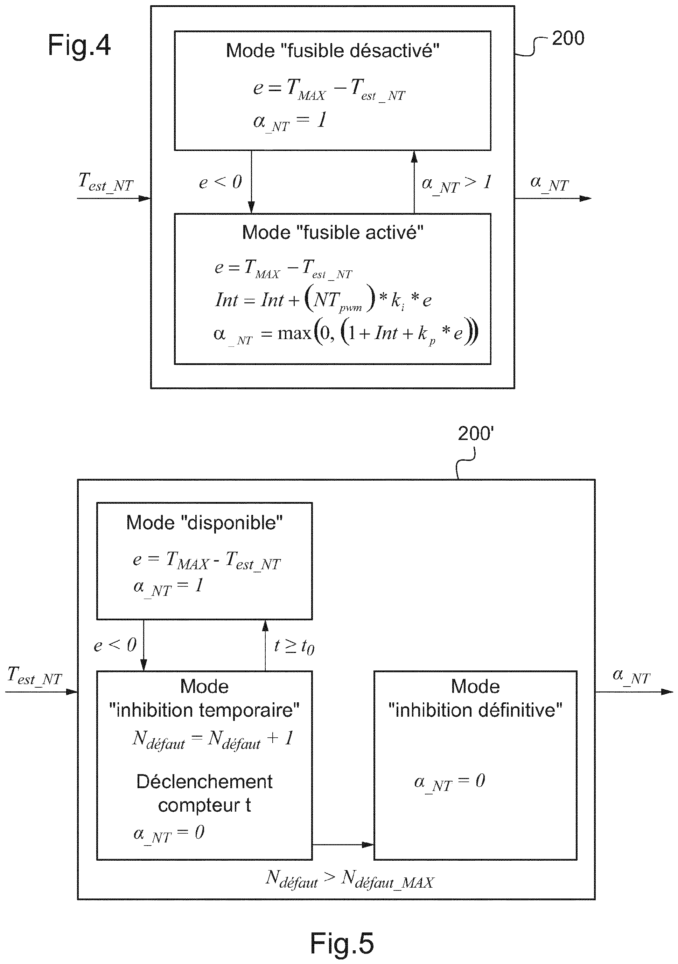

Comme illustré sur la figure 4, l'étape 200 du processus met en œuvre une logique de protection avec régulation de la température présentant deux modes de fonctionnement :

- un premier mode nommé « fusible désactivé » pour lequel la valeur $\alpha_{\_NT}$ du rapport cyclique $\alpha_{pwm}$ transmise à l'interrupteur 40 est toujours égale à 1, maintenant ainsi cet interrupteur 40 en position fermée ; et
- un second mode nommé « fusible activé » pour lequel la valeur $\alpha_{\_NT}$ du rapport cyclique $\alpha_{pwm}$ transmise à l'interrupteur 40 varie afin de limiter l'échauffement du conducteur électrique 2. Plus exactement, la valeur $\alpha_{\_NT}$ est obtenu par la mise en place d'un régulateur dont l'entrée est la différence $e$ entre la température maximum autorisée $T_{MAX}$ pour le conducteur électrique 2 et la température estimée $T_{est\_NT}$. De préférence, ce régulateur est une version discrétisée d'un régulateur proportionnel intégral s'écrivant en continu de la manière suivante :

$$e = T_{MAX} - T_{est\_NT}$$

$$\alpha_{\_NT} = \left( k_p + \frac{k_i}{s} \right) e$$

où s désigne l'opérateur de Laplace et $k_p$, $k_i$ respectivement le gain proportionnel et le gain intégral du régulateur.

Le passage de la forme continue à la forme discrète peut s'écrire comme suit en utilisant une approximation de p telle que par exemple $(1-z^{-1})/(N*T_{pwm})$ où $z^{-1}$ représente un retard d'une période:

$$e = T_{MAX} - T_{est\_NT}$$

$$Int = Int + \left(NT_{pwm}\right) * k_i * e$$

$$\alpha_{\_NT} = \max\left(0, \left(1 + Int + k_p * e\right)\right)$$

A chaque instant d'échantillonnage à la période N* $T_{pwn}$:

- la différence de température $e$ est calculée ;
- la variable d'état de l'intégrateur $Int$ est mise à jour à partir de la valeur précédente et de la différence de température $e$ multipliée par la période d'échantillonnage du bloc N*$T_{pwm}$ et par le gain de l'intégrateur $k_i$;
- la nouvelle valeur $\alpha_{\_NT}$ du rapport cyclique $\alpha_{pwm}$ est définie comme étant le maximum entre la valeur 0 (position interrupteur ouvert) et une somme des trois termes suivants : la valeur 1 (correspondant à la valeur initiale de $\alpha_{\_NT}$, la variable d'état de l'intégrateur Int et enfin la différence $e$ multipliée par le gain $k_p$ qui représente la composante proportionnelle du régulateur.)

Il est à noter que des techniques plus précises peuvent être mises en œuvre pour transformer le régulateur continu en régulateur discret, et que toute autre forme de régulation est possible.

Les transitions entre les 2 modes de fonctionnement « fusible activé » et fusible désactivé » de la logique de protection s'effectuent de la manière suivante.

Le passage du mode « fusible désactivé » au mode « fusible activé » est enclenché dès que différence $e$ entre la température maximum autorisée $T_{MAX}$ pour le conducteur électrique 2 et la température estimée $T_{est\_NT}$ devient négative (autrement dit, dès que la température estimée $T_{est\_NT}$ devient supérieure à la température maximum autorisée $T_{MAX}$). Le mode « fusible activé » permet ainsi de limiter (voire de couper) l'intensité efficace $I_{eff\_T}$ du courant circulant dans le conducteur électrique 2 afin de ramener sa température vers sa valeur maximum autorisée $T_{MAX}$.

A l'inverse, le passage du mode « fusible activé » au mode « fusible désactivé » s'effectue dès que la valeur $\alpha_{\_NT}$ du rapport cyclique $\alpha_{pwm}$ calculé par le régulateur devient supérieure à 1, c'est-à-dire indiquant que l'interrupteur 40 peut être maintenu en position complètement fermée.

Selon une variante de réalisation du procédé, l'étape de protection 200 est remplacé par une étape de protection 200' similaire mais mettant en œuvre une logique de protection plus simple sans régulateur (figure 5). Celle-ci présente alors trois modes de fonctionnement :

- un premier mode nommé « disponible » pour lequel la valeur $\alpha_{\_NT}$ du rapport cyclique $\alpha_{pwm}$ transmise à l'interrupteur 40 est toujours égale à 1, maintenant ainsi cet interrupteur 40 en position fermée ;
- un deuxième mode nommé « inhibition temporaire » pour lequel la valeur $\alpha_{\_NT}$ du rapport cyclique $\alpha_{pwm}$ transmise à l'interrupteur 40 est toujours égale à 0, maintenant ainsi cet interrupteur 40 en position ouverte ; et
- un troisième mode nommé « inhibition définitive » pour lequel la valeur $\alpha_{\_NT}$ du rapport cyclique $\alpha_{pwm}$ transmise à l'interrupteur 40 est également en permanence égale à 0, maintenant ainsi cet interrupteur 40 en position ouverte.

Le fonctionnement de la logique de protection est alors la suivante.

Tant que la différence $e$ entre la température maximum autorisée $T_{MAX}$ pour le conducteur électrique 2 et la température estimée $T_{est\_NT}$ par le modèle électrothermique reste supérieure ou égale à zéro, le premier mode « disponible » demeure actionné et l'interrupteur 40 est donc maintenu en position fermée.

Dès que cette différence $e$ devient négative (autrement dit, dès que la température estimée $T_{est\_NT}$ devient supérieure à la température maximum autorisée $T_{MAX}$), une transition est enclenchée vers le second mode « inhibition temporaire ». L'interrupteur 40 est alors mis en position ouverte, un défaut est comptabilisé à travers l'incrémentation d'un indice $N_{défaut}$, et un compteur t est enclenché afin de comptabiliser le temps d'ouverture de l'interrupteur 40. Dès que le compteur t atteint un durée prédéfini $t_0$ (ou ce qui revient au même, un nombre de période d'échantillonnage prédéfini), une transition est enclenchée vers le premier mode « disponible » pour lequel l'interrupteur 40 est à nouveau fermé.

Dès que la différence $e$ redevient négative, une nouvelle transition est enclenchée vers le second mode « inhibition temporaire » et un nouveau défaut est comptabilisé par l'incrémentation de la variable $N_{défaut}$.

Dès que le nombre de défauts $N_{défaut}$ devient supérieur à un seuil prédéfini par l'utilisateur ($N_{défaut\_MAX}$), le troisième mode « inhibition définitive » s'enclenche et maintient l'interrupteur 40 définitivement en position ouverte ($\alpha_{\_NT}$ = 0) afin de protéger le conducteur électrique 2.

Ces trois modes permettent ainsi de faire face à des défauts transitoires du courant provoquant ponctuellement une température excessive sur le conducteur électrique 2.

Cette variante est à privilégier lorsque la charge 3 ne peut pas supporter une modulation du courant (par exemple parce que cela dégrade trop la fonction rendue par la charge 3) ou encore lorsque cela provoque un échauffement trop important de l'interrupteur 40.

D'une manière générale, il est également à noter que lorsque le modèle électrothermique du conducteur électrique 2 estime la température en plusieurs points du conducteur 2, chacun de ses points étant associé à une valeur maximum de température autorisée, la deuxième étape de protection 200 ou 200' utilisera la différence de température $e$ la plus petite pour réguler l'interrupteur 40.

Bien entendu, la présente invention ne se limite pas aux formes de réalisation décrites et représentées, mais elle englobe toute autre variante d'exécution.

## Revendications

1. Procédé de commande d'un dispositif de protection d'un conducteur électrique (2) reliant électriquement une charge électrique (3) à une alimentation électrique (5), le dispositif comportant un capteur de courant (42) apte à mesurer l'intensité du courant circulant dans ledit conducteur (2), et un capteur de température (6) apte à mesurer la température ambiante à proximité d'un point situé le long dudit conducteur (2),
ledit procédé étant caractérisé en qu'il comporte une première étape (100) d'estimation de la valeur ($T_{est\_T}$) de la température ($T_{cond}$) en au moins un point sensible dudit conducteur (2) et en fonction des données reçues dudit capteur de température (6) et dudit capteur de courant (42), et une deuxième étape (200 ; 200') de protection au cours de laquelle la valeur ($\alpha_{\_NT}$) dudit rapport cyclique ($\alpha_{pwm}$) de l'interrupteur électronique (40) est calculée en fonction de la différence ($e$) entre une température maximale ($T_{MAX}$) prédéfinie pour ledit conducteur (2) et la dite valeur estimée de la température ($T_{est\_T}$).

2. Procédé de commande selon la revendication 1, **caractérisé en ce que** ladite première étape d'estimation (100) est reproduite périodiquement selon une période d'échantillonnage ($T_{éch}$).

3. Procédé de commande selon la revendication 2, **caractérisé en ce que** ladite première étape d'estimation (100) comporte une sous-étape de détermination de la valeur ($I_{eff\_T}$) de l'intensité efficace du courant circulant dans ledit conducteur (2) en fonction de la valeur ($\alpha_{p\_T}$) du rapport cyclique ($\alpha_{pwm}$) calculée à la période d'échantillonnage précédente, et de la dernière valeur ($I_{cond\_T}$) de l'intensité du courant ($I_{cond}$) circulant dans ledit conducteur (2) ayant été transmise par ledit capteur de courant (42).

4. Procédé de commande selon la revendication 3, **caractérisé en ce que** ladite première étape d'estimation (100) comporte une sous-étape de détermination, en fonction de ladite valeur ($I_{eff\_T}$) de l'intensité efficace et de la dernière valeur ($T_{amb\_T}$) de la température ambiante ($T_{amb}$) ayant été transmise par ledit capteur de température (6), de la quantité de chaleur générée par effet joule ($Q_{Joule}$) sur une dite période d'échantillonnage ($T_{éch}$) par le passage du courant dans ledit conducteur (2) diminuée de la quantité de chaleur évacuée ($Q_{évacuée}$) durant la même dite période ($T_{éch}$) par ledit conducteur (2) vers l'air ambiant.

5. Procédé de commande selon l'une des revendications 1 à 4, **caractérisé en ce que** ladite deuxième étape de protection (200 ; 200') est reproduite périodiquement selon une période d'échantillonnage ($T_{éch2}$) égale à un multiple (N) de ladite période de pilotage ($T_{pwm}$) de l'interrupteur électronique (40).

6. Procédé de commande selon la revendication 5, **caractérisé en ce que** ledit multiple (N) de ladite période de pilotage ($T_{pwm}$) de l'interrupteur électronique (40) est de préférence supérieur ou égal à 10.

7. Procédé de commande selon l'une des revendications 1 à 6, **caractérisé en ce que** ladite deuxième étape de protection (200) présente deux modes de fonctionnement, un premier mode nommé « fusible désactivé » pour lequel la valeur ($\alpha_{\_NT}$) dudit rapport cyclique ($\alpha_{pwm}$) est toujours égale à 1, et un second mode nommé « fusible activé » pour lequel cette valeur ($\alpha_{\_NT}$) est calculée par un régulateur en fonction de ladite différence ($e$) ; le passage dudit mode « fusible désactivé » audit mode « fusible activé » s'effectuant dès que ladite différence e devient négative, et le passage inverse du mode « fusible activé » au mode « fusible désactivé » s'effectuant dès que cette valeur ($\alpha_{\_NT}$) calculée par ledit régulateur devient supérieure à 1.

8. Procédé de commande selon l'une des revendications 1 à 6, **caractérisé en ce que** ladite deuxième étape (200') de protection présente un premier mode de fonctionnement nommé « disponible » pour lequel la valeur ($\alpha_{\_NT}$) dudit rapport cyclique ($\alpha_{pwm}$) est toujours égale à 1, et un deuxième mode de fonctionnement nommé « inhibition temporaire » pour lequel cette valeur ($\alpha_{\_NT}$) est toujours égale à 0 ; le passage dudit mode « disponible » audit mode « inhibition temporaire » s'effectuant dès que ladite différence (*e*) devient négative, et le passage inverse du mode « inhibition temporaire » au mode « disponible » s'effectuant dès que le temps passé (*t*) dans ledit mode « inhibition temporaire » atteint une durée prédéfini ($t_0$).

**9.** Procédé de commande selon la revendication 8, **caractérisé en ce que** chaque passage dudit mode « disponible » audit mode « inhibition temporaire » est comptabilisé à travers l'incrémentation d'un indice ($N_{défaut}$).

**10.** Dispositif électronique de protection pour la mise en œuvre du procédé selon l'une des revendications 1 à 9, comportant un boitier électronique de protection (4) situé entre ledit conducteur (2) et ladite alimentation (5),

  - un capteur de courant (42) apte à mesurer l'intensité ($I_{cond}$) du courant circulant dans ledit conducteur (2) ;
  - un capteur de température (6) apte à mesurer la température ambiante ($T_{amb}$) à proximité d'un point situé le long dudit conducteur (2) ;

ledit boîtier (4) comportant en outre :

  - un interrupteur électronique (40) de type MOSFET pilotable en mode modulation de largeur d'impulsion selon une période prédéterminée ($T_{pwm}$) et un rapport cyclique variable ($\alpha_{pwm}$) ; et
  - un module de commande (41) apte à déterminer et à transmettre audit interrupteur (40) selon un intervalle régulier, une nouvelle valeur ($\alpha_{\_NT}$) dudit rapport cyclique ($\alpha_{pwm}$) en fonction des données reçues dudit capteur de température (6) et dudit capteur de courant (42), ledit rapport cyclique calculé en fonction de la différence entre une température maximale prédéfinie ($T_{MAX}$) et une valeur estimée de la température ($T_{est\_T}$).

**11.** Dispositif électronique de protection selon la revendication 10, **caractérisé en ce qu'**il comporte une multitude de dits capteurs (6) de température ambiante ($T_{amb}$) disposés le long dudit conducteur (2) à proximité des points susceptibles d'être les plus chauds sous l'effet d'un courant excessif circulant dans ledit conducteur (2).

**12.** Dispositif électronique de protection selon l'une des revendications 10 ou 11, **caractérisé en ce qu'**il comporte un capteur (43) de température de la semelle ($T_{MOS}$) dudit interrupteur électronique (40).

**13.** Dispositif électronique de protection selon l'une des revendications 10 à 12, **caractérisé en ce que** ladite alimentation électrique est formée par la batterie (3) d'un véhicule automobile.

**14.** Dispositif électronique de protection selon l'une des revendications 10 à 13, **caractérisé en ce que** ledit conducteur (2) comporte un fil (2A) et deux connecteurs (2B, 2C) disposés aux deux extrémités dudit fil (2A), le premier (2B) des dits connecteurs étant branché sur ledit boîtier électronique (4) tandis que le second (2C) est branché sur ladite charge (3).

**15.** Dispositif électronique de protection selon l'une des revendications 10 à 14, **caractérisé en ce que** ledit module de commande (41) est implanté soit physiquement en matériel au sein de l'électronique de pilotage externe audit interrupteur (40) ou au sein même dudit interrupteur (40), soit en logiciel via un algorithme stocké en mémoire et relié à un calculateur présent sur une carte électronique que comporte ledit boitier (4).

**Patentansprüche**

**1.** Steuerverfahren einer Schutzvorrichtung eines elektrischen Leiters (2), der eine elektrische Last (3) mit einer Stromversorgung (5) verbindet, wobei die Vorrichtung einen Stromsensor (42) umfasst, der geeignet ist, die Stärke des Stroms, der in dem Leiter (2) fließt, zu messen, und einen Temperatursensor (6), der geeignet ist, die Umgebungstemperatur in der Nähe einer Stelle, die entlang des Leiters (2) liegt, zu messen, wobei das Verfahren **dadurch gekennzeichnet ist, dass** es einen ersten Schritt (100) zum Schätzen des Werts ($T_{est\_T}$) der Temperatur ($T_{cond}$) an mindestens einer empfindlichen Stelle des Leiters (2) und in Abhängigkeit von den Daten, die von dem Temperatursensor (6) und dem Stromsensor (42) empfangen werden, umfasst, und einen zweiten Schritt (200; 200') zum Schützen, in dessen Verlauf der Wert ($\alpha_{\_NT}$) des Tastverhältnisses ($\alpha_{pwm}$) des elektronischen Schalters (40) in Abhängigkeit von dem Unterschied (*e*) zwischen einer Höchsttemperatur ($T_{MAX}$), die für den Leiter (2) vordefiniert ist, und dem geschätzten Wert der Temperatur ($T_{est\_T}$) berechnet wird.

**2.** Steuerverfahren nach Anspruch 1, **dadurch gekennzeichnet, dass** der erste Schätzungsschritt (100) in regelmäßigen Abständen gemäß einer Abtastperiode ($T_{\text{éch}}$) wiederholt wird.

**3.** Steuerverfahren nach Anspruch 2, **dadurch gekennzeichnet, dass** der erste Schätzungsschritt (100) einen Unterschritt umfasst, um den Wert ($I_{\text{eff\_T}}$) der effektiven Stärke des Stroms, der in dem Leiter (2) fließt, in Abhängigkeit von dem Wert ($\alpha_{\text{p\_T}}$) des Tastverhältnisses ($\alpha_{\text{pwm}}$), der bei der vorhergehenden Abtastperiode berechnet wurde, und von dem letzten Wert ($I_{\text{cond\_T}}$) der der Stärke des Stroms ($I_{\text{cond}}$), der in dem Leiter (2) fließt, die von dem Stromsensor (42) übertragen wurde, zu bestimmen.

**4.** Steuerverfahren nach Anspruch 3, **dadurch gekennzeichnet, dass** der erste Schätzungsschritt (100) einen Unterschritt umfasst, um in Abhängigkeit von dem Wert ($I_{\text{eff\_T}}$) der effektiven Stärke und dem letzten Wert ($T_{\text{amb\_T}}$) der Umgebungstemperatur ($T_{\text{amb}}$), die von dem Temperatursensor (6) übertragen wurde, von der Wärmemenge, die durch Joule-Effekt ($Q_{\text{Joule}}$) auf einer Abtastperiode ($T_{\text{éch}}$) durch das Durchgehen des Stroms in dem Leiter (2) erzeugt wurde, abzüglich der Wärmemenge ($Q_{\text{évacuée}}$), die während derselben Zeitspanne ($T_{\text{éch}}$) von dem Leiter (2) zur Umgebungsluft abgeleitet wurde, zu bestimmen.

**5.** Steuerverfahren nach einem der Ansprüche 1 bis 4, **dadurch gekennzeichnet, dass** der zweite Schutzschritt (200; 200') in regelmäßigen Abständen gemäß einer Abtastperiode ($T_{\text{éch}}$) gleich einem Vielfachen (N) der Steuerperiode ($T_{\text{pwm}}$) des elektronischen Schalters (40) wiederholt wird.

**6.** Steuerverfahren nach Anspruch 5, **dadurch gekennzeichnet, dass** das Vielfache (N) der Steuerperiode ($T_{\text{pwm}}$) des elektronischen Schalters (40) vorzugsweise größer oder gleich 10 ist.

**7.** Steuerverfahren nach einem der Ansprüche 1 bis 6, **dadurch gekennzeichnet, dass** der zweite Schutzschritt (200) zwei Betriebsmodi aufweist, einen ersten Modus, "deaktivierte Sicherung" genannt, für den der Wert ($\alpha_{\text{\_NT}}$) des Tastverhältnisses ($\alpha_{\text{pwm}}$) immer gleich 1 ist, und einen zweiten Modus, "aktivierte Sicherung" genannt, für den dieser Wert ($\alpha_{\text{\_NT}}$) von einem Regler in Abhängigkeit von dem Unterschied (e) berechnet wird; wobei der Übergang von dem Modus "deaktivierte Sicherung" auf den Modus "aktivierte Sicherung" erfolgt, sobald der Unterschied (e) negativ wird, und der umgekehrte Übergang von dem Modus "Sicherung aktiviert" auf den Modus "Sicherung deaktiviert" erfolgt, sobald dieser Wert ($\alpha_{\text{\_NT}}$), der von dem Regler berechnet wird, größer als 1 wird.

**8.** Steuerverfahren nach einem der Ansprüche 1 bis 6, **dadurch gekennzeichnet, dass** der zweite Schutzschritt (200') einen ersten Betriebsmodus aufweist, der "verfügbar" genannt wird, für den der Wert ($\alpha_{\text{\_NT}}$) des Tastverhältnisses ($\alpha_{\text{pwm}}$) immer gleich 1 ist, und einen zweiten Betriebsmodus, der "vorübergehende Inhibition" genannt wird, für den dieser Wert ($\alpha_{\text{\_NT}}$) immer gleich 0 ist; wobei der Übergang von dem Modus "verfügbar" auf den Modus "vorübergehende Inhibition" erfolgt, sobald der Unterschied (e) negativ wird, und der umgekehrte Übergang von dem Modus "vorübergehende Inhibition" auf den Modus "verfügbar" erfolgt, sobald die Zeit (t), die in dem Modus "vorübergehende Inhibition" verbracht wurde, eine vorbestimmte Dauer ($t_0$) erreicht.

**9.** Steuerverfahren nach Anspruch 8, **dadurch gekennzeichnet, dass** jeder Übergang von dem Modus "verfügbar" auf den Modus "vorübergehende Inhibition" anhand von Inkrementieren eines Index ($N_{\text{défaut}}$) verbucht wird.

**10.** Elektronische Schutzvorrichtung für das Umsetzen des Verfahrens nach einem der Ansprüche 1 bis 9, die ein elektronisches Schutzgehäuse (4) umfasst, das zwischen dem Leiter (2) und der Stromversorgung (5) liegt,

- einen Stromsensor (42), der geeignet ist, die Stärke ($I_{\text{cond}}$) des Stroms, der in dem Leiter (2) fließt, zu messen;
- einen Temperatursensor (6), der geeignet ist, die Umgebungstemperatur ($T_{\text{amb}}$) in der Nähe einer Stelle, die entlang des Leiters (2) liegt, zu messen;

wobei das Gehäuse (4) außerdem Folgendes umfasst:

- einen elektronischen Schalter (40) vom Typ MOSFET, der in Impulsbreitenmodulation gemäß einer vorbestimmten Periode ($T_{\text{pwm}}$) und einem variablen Tastverhältnis ($\alpha_{\text{pwm}}$) steuerbar ist; und
- ein Steuermodul (41), das geeignet ist, um einen neuen Wert ($\alpha_{\text{\_NT}}$) des Tastverhältnisses ($\alpha_{\text{pwm}}$) in Abhängigkeit von den Daten, die von dem Temperatursensor (6) und dem Stromsensor (42) empfangen werden, zu bestimmen und zu dem Schalter (40) gemäß einem regelmäßigen Intervall zu übertragen, wobei das Tastverhältnis in Abhängigkeit von dem Unterschied zwischen einer vordefinierten Höchsttemperatur ($T_{\text{MAX}}$) und einem geschätzten Wert der Temperatur ($T_{\text{est\_T}}$) berechnet wird.

**11.** Elektronische Schutzvorrichtung nach Anspruch 10, **dadurch gekennzeichnet, dass** sie eine Vielzahl der Sensoren (6) der Umgebungstemperatur ($T_{amb}$) umfasst, die entlang des Leiters (2) in der Nähe der Stellen angeordnet sind, die unter der Einwirkung eines übermäßigen Stroms, der in dem Leiter (2) fließt, die heißesten sein können.

**12.** Elektronische Schutzvorrichtung nach einem der Ansprüche 10 oder 11, **dadurch gekennzeichnet, dass** sie einen Temperatursensor (43) der Sohle ($T_{MOS}$) des elektronischen Schalters (40) umfasst.

**13.** Elektronische Schutzvorrichtung nach einem der Ansprüche 10 bis 12, **dadurch gekennzeichnet, dass** die Stromversorgung aus einer Batterie (3) eines Kraftfahrzeugs besteht.

**14.** Elektronische Schutzvorrichtung nach einem der Ansprüche 10 bis 13, **dadurch gekennzeichnet, dass** der Leiter (2) einen Draht (2A) und zwei Steckverbinder (2B, 2C) umfasst, die an den zwei Enden des Drahts (2A) angeordnet sind, wobei der erste (2B) der Steckverbinder auf dem elektronischen Gehäuse (4) angeschlossen ist, während der zweite (2C) auf der Last (3) angeschlossen ist.

**15.** Elektronische Schutzvorrichtung nach einem der Ansprüche 10 bis 14, **dadurch gekennzeichnet, dass** das Steuermodul (41) entweder physisch aus Material innerhalb der Steuerelektronik außerhalb des Schalters (40) implantiert ist, oder innerhalb desselben Schalters (40), oder als Software über einen Algorithmus, der in dem Speicher gespeichert ist und mit einem Rechner verbunden ist, der auf einer Elektronikkarte, die das Gehäuse (4) umfasst, anwesend ist.

**Claims**

**1.** A method for controlling a device for protecting an electric conductor (2) connecting electrically an electric charge (3) to an electric supply (5), the device comprising a current sensor (42) suitable for measuring the intensity of the current circulating in said conductor (2), and a temperature sensor (6) suitable for measuring the ambient temperature close to a point situated along said conductor (2),
said method being **characterized in that** it comprises a first step (100) of estimation of the value ($T_{est\_T}$) of the temperature ($T_{cond}$) at at least one sensitive point of said conductor (2) and as a function of the data received from said temperature sensor (6) and from said current sensor (42), and a second step (200; 200') for protection, during which the value ($\alpha_{\_NT}$) of said cyclic ratio ($\alpha_{pwm}$) of the electronic switch (40) is calculated as a function of the difference (e) between a predefined maximum temperature ($T_{MAX}$) for said conductor (2) and said estimated value of the temperature ($T_{est\_T}$).

**2.** The method for controlling according to Claim 1, **characterized in that** said first estimation step (100) is reproduced periodically according to a sampling period ($T_{éch}$).

**3.** The method for controlling according to Claim 2, **characterized in that** said first estimation step (100) comprises a sub-step of determining the value ($I_{eff\_T}$) of the effective intensity of the current circulating in said conductor (2) as a function of the value ($\alpha_{p\_T}$) of the cyclic ratio ($\alpha_{pwm}$) calculated at the preceding sampling period, and of the last value ($I_{cond\_T}$) of the intensity of the current ($I_{cond}$) circulating in said conductor (2) having been transmitted by said current sensor (42).

**4.** The method for controlling according to Claim 3, **characterized in that** said first estimation step (100) comprises a sub-step of determining, as a function of said value ($I_{eff\_T}$) of the effective intensity and of the last value ($T_{amb\_T}$) of the ambient temperature ($T_{amb}$) having been transmitted by said temperature sensor (6), of the quantity of heat generated by Joule effect ($Q_{Joule}$) over a said sampling period ($T_{éch}$) by the passage of the current in said conductor (2) reduced by the amount of evacuated heat ($Q_{évacuée}$) during the same said period ($T_{éch}$) by said conductor (2) toward the ambient air.

**5.** The method for controlling according to one of Claims 1 to 4, **characterized in that** said second protection step (200; 200') is reproduced periodically according to a sampling period ($T_{éch2}$) equal to a multiple (N) of said control period ($T_{pwm}$) of the electronic switch (40).

**6.** The method for controlling according to Claim 5, **characterized in that** said multiple (N) of said control period ($T_{pwm}$) of the electronic switch (40) is preferably greater than or equal to 10.

7. The method for controlling according to one of Claims 1 to 6, **characterized in that** said second protection step (200) presents two operating modes, a first mode designated "fuse deactivated" for which the value ($\alpha_{\_NT}$) of said cyclic ratio ($\alpha_{pwm}$) is always equal to 1, and a second mode designated "fuse activated" for which this value ($\alpha_{\_NT}$) is calculated by a regulator as a function of said difference ($e$); the passage from said "fuse deactivated" mode to said "fuse activated" mode being carried out as soon as said difference e becomes negative, and the inverse passage from the "fuse activated" mode to the "fuse deactivated" mode being carried out as soon as this value ($\alpha_{\_NT}$) calculated by said regulator becomes greater than 1.

8. The method for controlling according to one of Claims 1 to 6, **characterized in that** said second protection step (200') presents a first mode of operation designated "available" for which the value ($\alpha_{\_NT}$) of said cyclic ratio ($\alpha_{pwm}$) is always equal to 1, and a second mode of operation designated "temporary suppression" for which this value ($\alpha_{\_NT}$) is always equal to 0; the passage from said "available" mode to said "temporary suppression" mode being carried out as soon as said difference (e) becomes negative, and the inverse passage from the "temporary suppression" mode to the "available" mode being carried out as soon as the time passed (t) in said "temporary suppression" mode reaches a predefined duration ($t_0$).

9. The method for controlling according to Claim 8, **characterized in that** each passage from said "available" mode to said "temporary suppression" mode is compatibilized through the incrementation of an index ($N_{défaut}$).

10. An electronic protection device for the implementation of the method according to one of Claims 1 to 9, comprising an electronic protection housing (4) situated between said conductor (2) and said supply (5),

   - a current sensor (42) suitable for measuring the intensity ($I_{cond}$) of the current circulating in said conductor (2);
   - a temperature sensor (6) suitable for measuring the ambient temperature ($T_{amb}$) close to a point situated along said conductor (2);

   said housing (4) further comprising:

   - an electronic switch (40) of the MOSFET type which can be controlled in pulse width modulation mode according to a predetermined period ($T_{pwm}$) and a variable cyclic ratio ($\alpha_{pwm}$) ; and
   - a control module (41) suitable for determining and transmitting to said switch (40) according to a regular interval, a new value ($a_{\_NT}$) of said cyclic ratio ($\alpha_{pwm}$) as a function of the data received from said temperature sensor (6) and from said current sensor (42), said cyclic ratio calculated as a function of the difference between a predefined maximum temperature ($T_{MAX}$) and an estimated value of the temperature ($T_{est\_T}$).

11. The electronic protection device according to Claim 10, **characterized in that** it comprises a plurality of said sensors (6) of ambient temperature ($T_{amb}$) disposed along said conductor (2) close to points which are liable to be hottest under the effect of an excessive current circulating in said conductor (2).

12. The electronic protection device according to one of Claims 10 or 11, **characterized in that** it comprises a temperature sensor (43) of the base ($T_{MOS}$) of said electronic switch (40).

13. The electronic protection device according to one of Claims 10 to 12, **characterized in that** said electric supply is formed by the battery (3) of a motor vehicle.

14. The electronic protection device according to one of Claims 10 to 13, **characterized in that** said conductor (2) comprises a wire (2A) and two connectors (2B, 2C) disposed at the two ends of said wire (2A), the first (2B) of said connectors being connected to said electronic housing (4), whereas the second (2C) is connected to said charge (3).

15. The electronic protection device according to one of Claims 10 to 14, **characterized in that** said control module (41) is installed either physically in hardware within the control electronics external to said switch (40) or within said switch (40) itself, or in software via an algorithm stored in memory and connected to a computer present on a printed circuit board which said housing (4) comprises.

Fig.1

Boîtier électronique

Module de commande

$T_{amb}$

$I_{cond}$  $T_{MOS}$  40  $\underline{\alpha}_{NT}$  41

MOSFET
($\alpha_{pwm}$, $T_{pwm}$)

42  43

5  Batterie

2B  6  6  2A  6  2C  3

Fil électrique  Charge

2

Fig.2

$T_c$  $T_{amb}$  $T_i$
$\rho_c$  $\rho_i$
$C_c$  $C_i$
$\sigma_{c(T)}$  $\underline{C}$  $\underline{i}$  $h(T_i, T_{amb})$  $\varepsilon$

2

$R_{int}$
$R_{ext}$

EP 2 850 709 B1

Estimation de la valeur $T_{est\_T}$ de
la température $T_{cond}$ du conducteur 2

Période d'échantillonage : $T_{éch} = T_{pwm}$

$T_{MOS\_T} \rightarrow$
$T_{amb\_T} \rightarrow$
$I_{cond\_T} \rightarrow$

$$\phi_{conv} = h\left(T_{pest\_T}, T_{amb\_T}\right) 2\pi R_{ext}\left(T_{pest\_T} - T_{amb\_T}\right)$$

$$\phi_{ray} = \varepsilon\sigma 2\pi R_{ext}\left(T_{pest\_T}^{4} - T_{amb\_T}^{4}\right)$$

$$\phi_{ext} = \phi_{conv} + \phi_{ray}$$

$$Q_{évacuée} = T_{pwm} * \phi_{ext}$$

$$I_{eff\_T} = \sqrt{\alpha_{p\_T} * I_{cond\_T}^{2}}$$

$$Q_{Joule} = T_{pwm}\left(\frac{1}{\sigma_{c}\left(T_{pest\_T}\right)\pi R_{int}^{2}} I_{eff\_T}^{2}\right)$$

$$Q_{cond} = Q_{Joule} - Q_{évacuée}$$

$$T_{est\_T} = T_{pest\_T} + \frac{1}{C_{T}} Q_{cond}$$

100

$\downarrow T_{est\_T}$

Sous-échantillonage — 150

$\downarrow T_{est\_NT}$

Calcul de la valeur $\alpha_{\_NT}$ du rapport
cyclique $\alpha_{pwm}$ de l'interrupteur électronique 40

Période d'échantillonnage : $T_{éch2} = N \times T_{pwm}$

200

$\downarrow \alpha_{\_NT}$

Retard d'une période $Z^{-1}$ — 220

$\downarrow \alpha_{p\_NT}$

Sur-échantillonnage — 250

$\downarrow \alpha_{p\_T}$

Fig.3

**Fig.4**

Mode "fusible désactivé"

$$e = T_{MAX} - T_{est\_NT}$$

$$\alpha_{\_NT} = 1$$

200

$T_{est\_NT}$

$e < 0$

$\alpha_{\_NT} > 1$

$\alpha_{\_NT}$

Mode "fusible activé"

$$e = T_{MAX} - T_{est\_NT}$$

$$Int = Int + \left(NT_{pwm}\right) * k_i * e$$

$$\alpha_{\_NT} = \max\left(0, \left(1 + Int + k_p * e\right)\right)$$

200'

Mode "disponible"

$$e = T_{MAX} - T_{est\_NT}$$

$$\alpha_{\_NT} = 1$$

$T_{est\_NT}$

$e < 0$

$t \geq t_0$

$\alpha_{\_NT}$

Mode "inhibition temporaire"

$$N_{défaut} = N_{défaut} + 1$$

Déclenchement compteur t

$$\alpha_{\_NT} = 0$$

Mode "inhibition définitive"

$$\alpha_{\_NT} = 0$$

$$N_{défaut} > N_{défaut\_MAX}$$

**Fig.5**

**EP 2 850 709 B1**

## RÉFÉRENCES CITÉES DANS LA DESCRIPTION

**Documents brevets cités dans la description**

- FR 1254471
- EP 2058914 A
- JP 2004336887 A
- EP 2296243 A